# DEMANDE DE BREVET EUROPEEN

(11) **EP 0 732 488 A2**
(43) Date de publication de la demande: **18.09.1996**
(21) Numéro de dépôt: 95203579.8
(22) Date de dépôt: 19.12.1995
(51) Int. Cl.: F02B 53/00

(54) **Système d'entrainement**

(30) Priorité: 16.12.1994 FR 9415448; 27.01.1995 FR 9501151
(71) Demandeur: Canot, Albert, F-88390 Darnieulles (FR)
(72) Inventeur: Canot, Albert, F-88390 Darnieulles (FR)

(57) **Abrégé**

Avion à grande vitesse , ou hydravion spatial muni de moteurs deux temps fort probablement autopropulseurs à pistons droits et toriques , actionnant chacun une hélice , et deux masses semie-rotative (2) , moteurs placés l'un dérriére l'autre de chaque coté du fuselage d'un trimaran , et dont les hélices créent un puissant courant d'air permettant le fonctionnement à basse vitesse , à haute altitude de deux petits statoréacteurs , ou de statofusées , ou de turboréacteurs , munis , ou démunis de turbines , les masses semie-rotatives (2) dont l'arret est realisé à l'aide de systèmes à ressorts peuvent en milieu spatial avec l'aide de l'atome donner des propulsions de tés longues durée , les moteurs deux temps fonctionnent sans addition d'huile au carburant , le moteur représenté par la figure 4 n'est par autopropulseur , mais il peut animer des roues , ou une , ou deux hélices , il sera moins gourmand en carburant que tous les moteurs connus , ne perdant aucune force sur des culasses , ni en ses points morts des manivelles , et il utilise mieux que le moteur classique la chaleur des explosions pouvant être doté de trés longs cylindres ses dispositifs bielles-manivelles le lui permettant , ce moteur peut également animer deux , ou quatre masses semie-rotatives , et une hélice ,ces moteurs sont peut êtres capables d'utiliser la détonatio.

## Description

D'aprés Monsieur Lionel Laming licencié es science , ingénieur E. N. S. P. et auteur du livre L'astronautique de la collection que sais-je , rien n'est impossible , les principes les plus sacrés de la mécaniques , conservation de l'énergie , lois fondamentales de la mécanique etc ... tout peut être battu en bréche , mais la possibilité que cela arrive en dehors de trés puissants laboratoires , et avancés par de trés puissants diplomés Nobel est si faible que cela ne vaut guére la peine de si attarder .

T'elle est la réponse qui me fut faite au sujet d'une invention qui prétend que l'action des explosions ayant lieu sur les culasses d'un moteur à piston peut être autopropulsive sans que l'action de réaction ayant lieu sur le piston puisse interdire l'autopropulsion , en I984 l'invention n'était qu'ébauchée .

Ce moteur à combustion interne a quatre pistons droits figure I , utilise à la fois les forces données sur les pistons pour mouvoir des hélices , pour actionner deux masses (2) ne décrivant que des demies rotations , et les forces appliquées sur ses culasses , qui sont aussi fortes que celles appliquées sur ses pistons .

J'ai déposé le I6/I2/94 un brevet Francais N° 94 I5 448 , et le brevet Français N° 95/0I/I5I , le 27/0I/95 pour ce genre de moteur , et la présente demande de brevet Européen .

Les brevets Français délivrés N° 84 04 479 et 89 I6 454 préconisent également des moteurs du méme genre , mais à pistons toriques , que la présente demande perfectionnent également .

Dans le moteur à pistons droits de la figure I les explosions ayant lieu dans les deux cylindres verticaux (43) trouvent des points d'appui beaucoup plus puissants que ceux utilisés par la fusée qui ne s'appuye que sur l'inertie d'un gaz rejeté vers l'arriére , d'ou un gaspillage insensé de carburant et de comburant .

Autre avantage de ces moteurs les pistons -masses rejetés vers l'arriére ne sont pas des masses perdues .

Enjeu colossal selon Messieurs Piere Lefort , et Loinel Laming auteurs du vol vertical collection que sais-je .

Dans les moteurs à pistons droits préconisés en particulier celui de la figure I le rejet vers l'arriére des pistons (40) et (I) par les explosions qui appliquent également des forces propulsives sur les culasses ne donne pas de forces anti-propulsives , car ce rejet ne fait que comprimer le comburant , carburé ou non entre les deux pistons (I) , compression ayant lieu dans un cylindre horizontal donc sans effet sur les forces appliquées sur les culasses des cylindres (43) ;disposés verticalement .

L'explosion qui suit ne fait que lancer les quatre pistons (I et 40 ) dans le sens de l'autopropulsion , et de ce fait les pistons constituent de puissants points d'appui pour les deux explosions ayant lieu simultannément dans les cylindres (43) de chaque coté du centre de gravité .

En ces moments les pistons sont des masses indépendantes de l'engin , les seuls supports incapables de donner des forces antipropulsives étant les cylindres , les bielles (7) , les bras (20) , les pivots (6),qui ne peuvent créer des forces anti-propulsives .

Pour la mise en route les points morts des bielles manivelles (4) sont passés , ensuite des avances à l'injection , ou à l'allumage empéchent le passage des points morts des bielles manivelles (4) , ce afin que les pistons soient de puissants points d'appui. . Les bielles manivelles (4) etant plus petites que les bielles manivelles (3) elles interdisent aux bielles manivelles (3) de passer leurs points morts lors de la mise en route , ensuite ce sont les avances à l'allumage qui le font , graçe aux bielles M.(3) Ces moteurs animent également deux masses semies rotatives (2) dont l'arret et le renvoi dans l'autre sens est due aux explosions ayant lieu dans tout les cylindres , ces masses (2) donnant des tractions propulsives pendant de trés longues durées , pouvant êtres également animées par les démarreurs du moteur solidaires des bielles manivelles (4) , démarreurs actionnés par de l'électricité produite à l'aide de l'atome , qui peut également produire un gaz comprimé recyclé actionnant les pistons .

Ces bielles manivelles (3) sont actionnées par les bras solidaires des pistons , et l'axe des manivelles (3) est solidaire d'un pignon denté (9) qui actionne à l'aide d'une chaine un autre pignon (22) solidaire du bras supportant les masses (2) .

Pour l'arret et le renvoi dans l'autre sens des masses semies rotatives (2) les explosions sont aidées par 4 systémes à ressorts (27) contenus dans des cylindres toriques , (42) dans les quels ont lieu des injection d'huile quand les ressorts sont débandés .

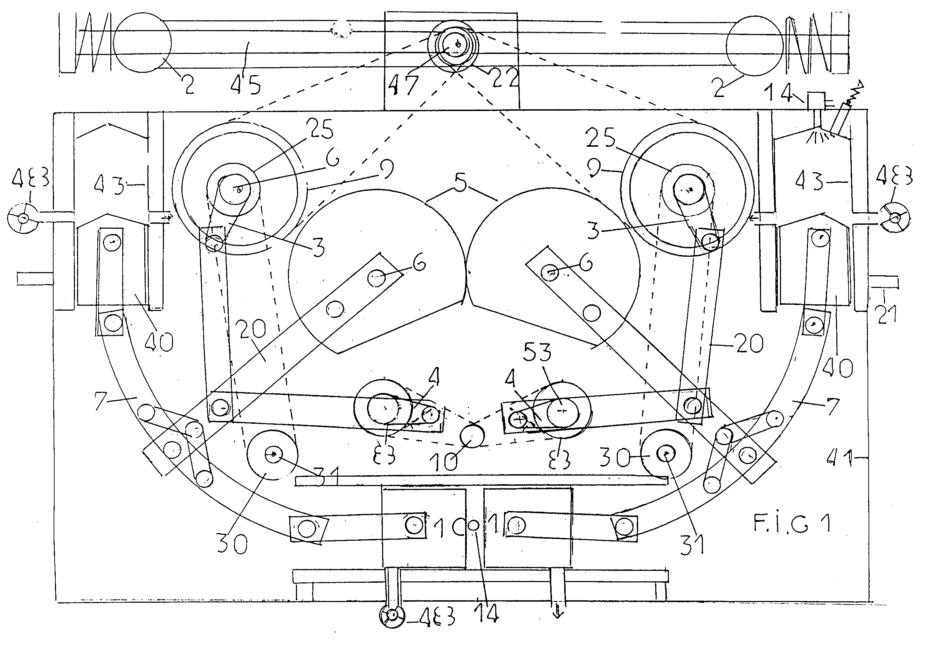

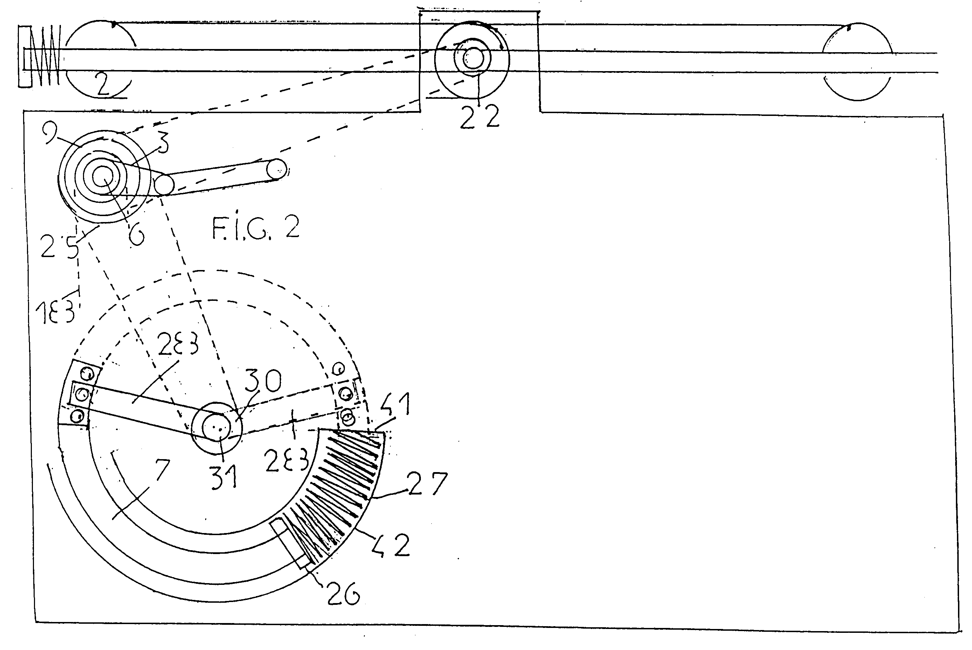

Les pistons (27) étant plus petits que les cylindres (42) ils laissent passer cette huile qui évite l'usure rapide des ressorts , et qui donne une certaine force propulsive sur les culasses (4I) , figure 2 , l'axe (6) étant solidaire depignons dentés actionnants l'axe (3I) solidaire du pistons torique (26).

Les masses (2) coulissent sur les bras (45) elles peuvent donc êtres rétractée vers l'axe (22) ce pour faciliter la mise en route du moteur , en ce cas elles seront rétractées par des cables qui s'enrouleront sur une poulie tournant sur l'axe (47) , poulie animée par un petit moteur électrique , des freins peuvent serrer cette poulie pendant la mise en route du moteur , et se déserrerlégérement afin d'éviter un choc brutal des masses (2) que la force centrifuge enverra buter les ressorts d'extrémité solidaires des bras (45).

Des compresseurs d'air , et dans le vide de comburant (48) assureront l'injection du comburant de ce deux temps dont l'intérieur des cylindres peut être graissé à l'aide d'une pompe , et qui fort probablement n'auront pas besoin d'addition d'huile au carburant .

Ce moteur ainsi que le systéme à ressorts (27) figure 2 sont enfermés dans un carter (4I) , les pignons dentés (9) ainsi que les chaines actionnant les masses semie-rotatives sont situées à l'extérieur du carter , qui est muni de pivots (2I) , ce qui permet d'orienter le moteur dans trois positions , permettant l'envol vertical , la poussée horizontale , un frein moteur pour les rentrées en atmosphéres , encore que un bouclier relevable horizontalement peut protéger les moteurs .

Ces moteurs peuvent également actionner des hélices sans passer les points morts des B.M. (4) des hélices , ou des roues graçe à des encliquetages (8) qui donnent le mouvement rotatif à un axe( I0 ) , un encliquetage travaillant dans un sens l'autre dans l'autre sens donc toutes les explosions sont utilisées pour obtenir ce mouvement . Les forces appliquées sur les culasses des cylindres (43) sont aussi fortes que celles appliquées sur les pistons et qui sont capables de propulser une automobile dans une trés forte pente , la réaction étant courbe , et ne donnant qu'une compression horizontale , graçe aux systèmes pendulaires reliant les pistons , ce n'est pas cette compression horizontale qui peut interdire l'autopropulsion , et comme il n'y a aucun autre organe , dans ce système fermé , et que les deux cylindres verticaux ne sont pas des systèmes fermés puisse qu'ils appliquent des forces propulsives sur les pistons .

Evidemment l'on peut dire que ce moteur est un systémeisolé hors ce moteur n'est pas plus isolé que la fusée , qui elle n'on plus ne reçoi aucune forcede l'extérieur , quand au point d'appui n'est-t-il pas supérieur à celui de la fusée , et les pistons qui servent de points d'appui ne sont pas des masses perdues .

D'aprés Monsieur Lionel Laming dans sont livre l'astronautique nous pouvons lire page (32) , il y a 60 ans les pionniers de l'aviation réclamaient le cheval vapeur dans un boitier de montre , la situation encore de nos jours est identique pour l'espace , il faudrait un autopropulseur capable de soulever le double de sont poids pendant une heure .

Quelle quantité de mouvement peut -t-on attendre d'une explosion ayant lieu sur la culasse d'un cylindre de moteur à pistons de I00 millimétre de diamétre , chaque centimètre carré reçevant une poussée de 30 Kg , le résultat est de I200 Kg , comme cette poussée s'éxerce sur deux culasses il s'agi donc de 2400 Kg , que le moteur classique ne peut utiliser pour s'autopropulser la force de sens contraire qui a lieu sur son vilbrequin le lui interdisant , quand au poids du moteur il ne dépasserait certainement pas I50Kg : et sonttemps de fonctionnement serait de nombreuses heures .

Les deux systèmes pendulaires de ce moteur supportant les pistons (I) et 40) sont solidaires à l'aide d'engrenages (5) .

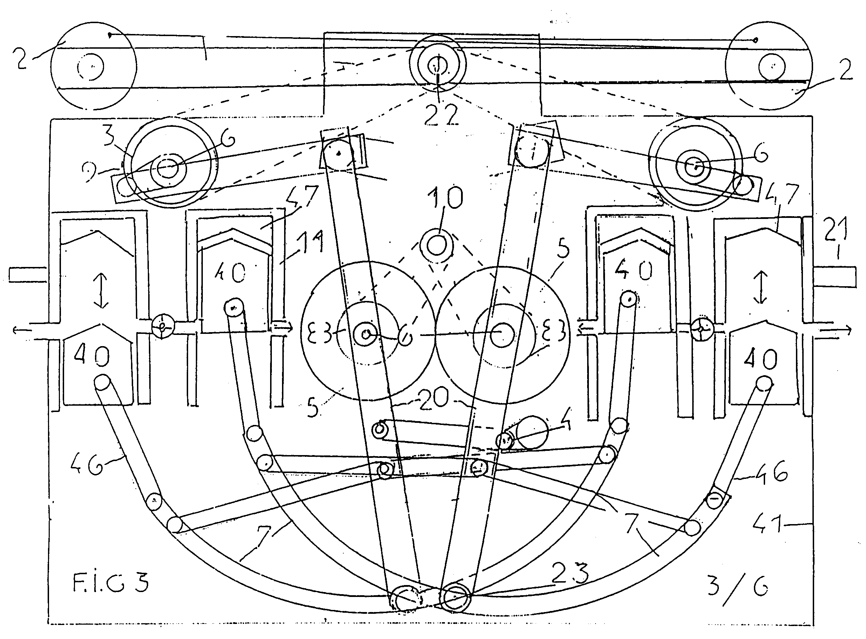

La figure 3de la planche 3 représente une variante de réalisation qui est également un moteur à quatre pistons droits composé de deux systèmes pendulaires supperposés , reliés à l'aide d'engrenages (5) , solidaires . Les deux explosions qui ont lieu simultannément dans chaque systéme différent autopropulsent en appliquant leur force sur les culasses , et le rejet des pistons vers l'arrière ne fait qu'appliquer une force propulsive en comprimant le comburant carburé , ou non dans les deux autres cylindres , cela graçe aux tiges courbes (7) et aux systémes pendulaires supportant les pistons .

L'animation des masses (2) semies rotatives a lieu comme pour l'autre moteur à l'aide de bielles manivelles (3) dont le passage de leurs point morts ne peut s'effectuer , les biellesmanivelles (4) étant plus petites . Le mouvement rotatif est obtenu à l'aide des mémes organes que ceux du moteur de la figure I .

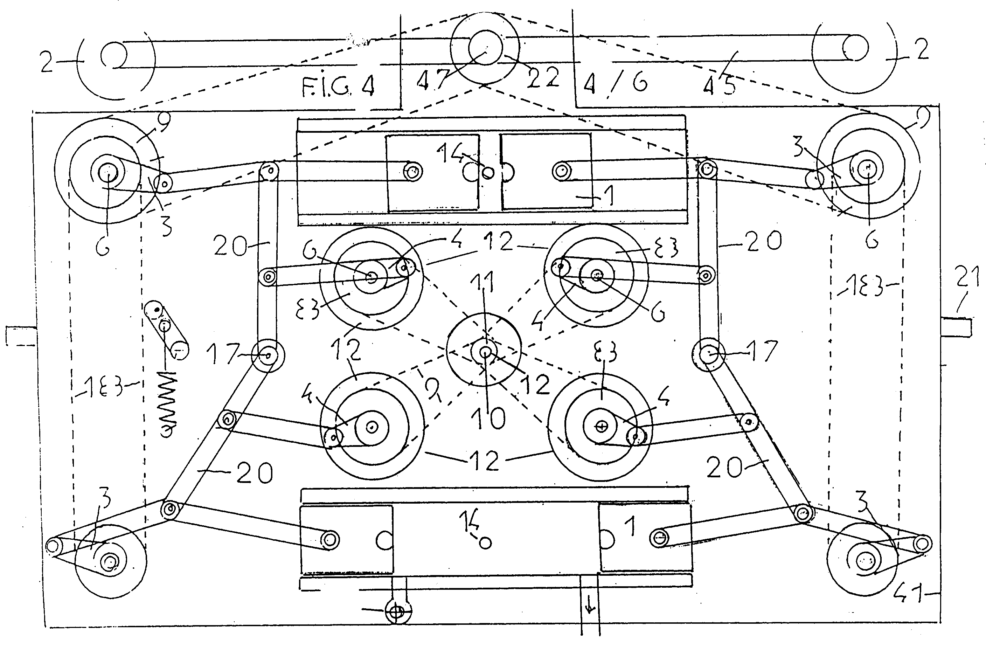

La figure 4 de la planche 4 représente une variante de réalisation également à quatre pistons droits mais dont les explosions ne permettent que d'obtenir le mouvement rotatif et l'animation de deux masses semies rotatives .

Ce moteur a de grandes qualités aucune force ne se perd sur ses culasses , ses systèmes bielles-manivelle ne lui interdisent pas d'avoir de très long cylindres , donc il peut mieux utiliser la chaleur des explosions , comme les autres moteurs préconisés il peut ne pas passer les points morts de ses manivelles , donc aucune force perdue , il donne le mouvement rotatif à l'aide d'encliquetages , ou si ont le désire sans encliquetages , il peut animer des masses semies rotatives à l'aide des mémes organes que les autres moteurs . Pour l'automobile sans masses semies rotatives il serait certainement moins gourmand en carburant que le moteur classique . Il peut avoir de très longs cylindres ceuxçi pouvant être disposés en long dans l'automobile .

Ce deux temps comme les autres moteurs a également l'intérieur de ses cylindres graissé par des jets d'huile quand les pistons en phase de compression , tout les autres organes peuvent l'être également.

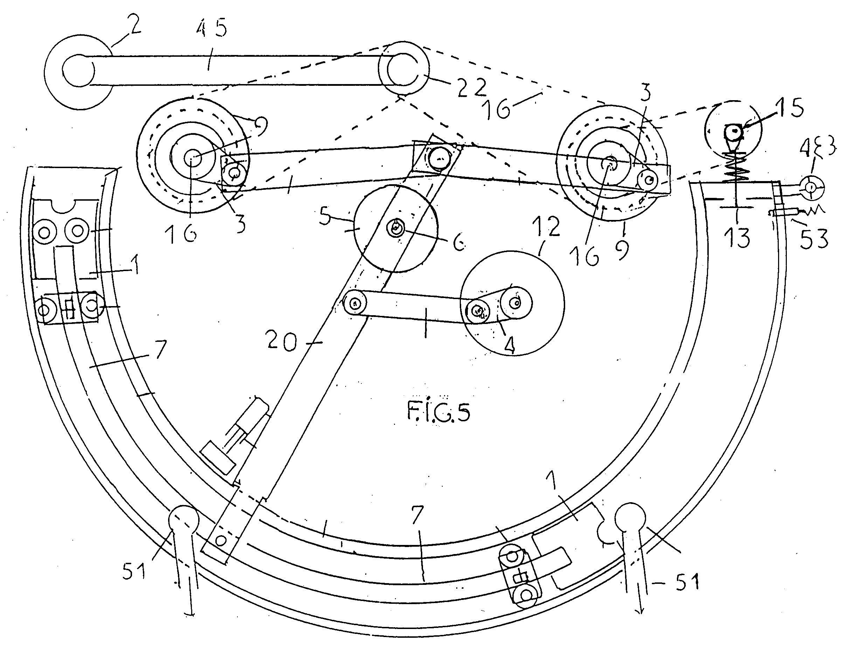

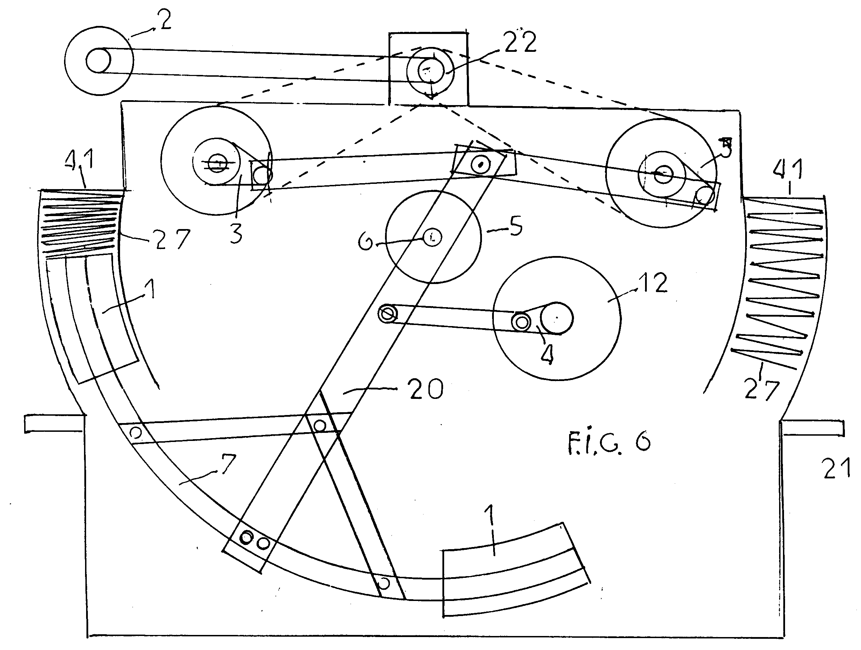

La figure de la planche 5 représente une variantre de réalisation d'un moteur fort probablement également autopropulseur , la figure 5 ne représente qu'une partie de ce moteur , l'autre partie identique est solidaire de la première sur un autre plan à l'aide d'engrenages (5) , ce moteur à quatre pistons toriques qui sont solidaires comme le moteur de lafigure I à l'aide de tiges toriques , également solidaires à l'aide de systèmes pendulaires qui suppriment la réaction antipropulsive qui se produit aux points morts bas du moteur classique .

Deux explosions simultannées appliquent des forces propulsives sur les culasses ,rejettent les pistons de manière courbe vers l'arriérre , les deux autres pistons ne faisant que comprimer le comburant ce n'est pas cette compression qui peut interdire l'autopropulsion . Ce moteur anime également deux masses semies rotatives (2) à l'aide des mémes organes que les moteurs à pistons droits . Ce moteur peut également ne pas passer les points morts de ses bielles manivelles (4) une fois la mise en route effectuée et comme les autres moteurs donner un mouvement rotatif à l'aide d'enclique-tages non figurés sur le dessin .

Cemoteur comme le moteur de la figure I peut être contenu dans un carter orientable , et être muni du système à ressorts de la figure 2 qui aide à l'arret des masses(2) et à leur renvoi dans l'autre sens . Ses qualités sont sa grande puissance , une meilleure utilisation de la chaleur de l'explosion , son défaut la difficulté de sa construction , pourtant deux constructeurs se déclarent capables d'usiner ce moteur .

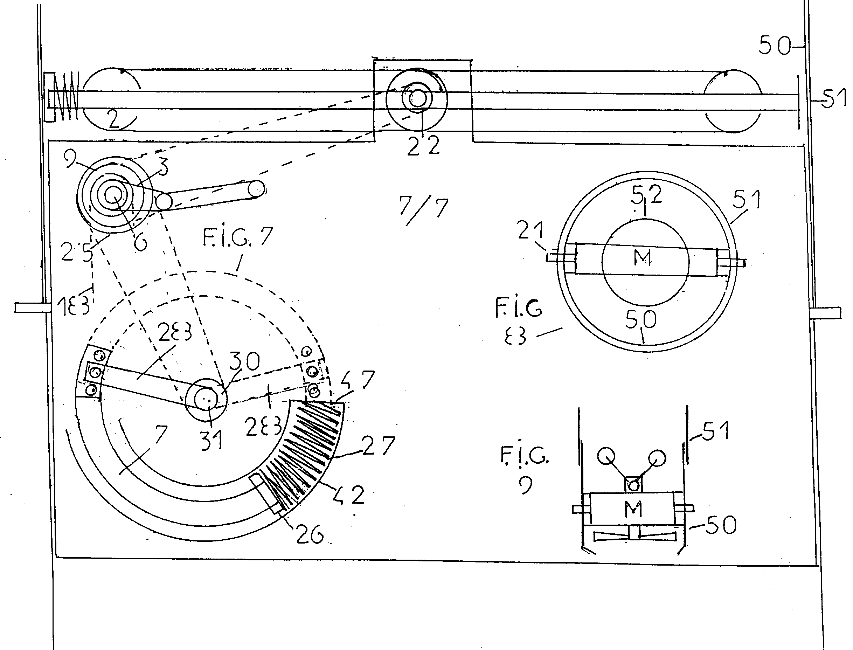

La figure 6 de la planche 6 représente une partie coté droit d'un propulseur capable de donner des propulsions de trés longues durées en milieu spatial , si ses bielles manivelles (4) sont animées avec l'aide de l'atome .

La propulsion qu'il donnera sera supérieure à celle donnée par les propulseurs ioniques , ou photoniques sans avoir besoin de torrents d'énergie , ce propulseur peut animer à l'aide des mémes organes que les moteurs des masses semies rotatives ,ou simplement propulser à l'aide de ses quatre pistons (I) lourds qui butent des ressorts (27) contenus dans des petits cylindres toriques (23) , ressorts pouvant êtres graissés par des projections d'huile si le propulseur comme les moteurs est enfermé dans un carter .

Une maquette reproduisant exactement les organes du moteur de la figure I , dont les quatre pistons (I) et(4o) étaient remplacés par des masses animées par les mains de l'opérateur juché sur le chariot supportant la maquette et l'opérateur s'autopropulse à chaque lancement des masses (40) contre deux ressorts solidaires du chariot . Sur une des masses (I) un ressort est soudé , aprés avoir lancé les masses contre les deux ressorts solidaires du chariot l'opérateur lance les masses en sens contraire de la projection du chariot le ressort soudé représente bien une compression , et comme la maquette ne recule pas cela prouve que les systèmes pendulaires qui supportent les masses ou les pistons dans le moteur annulent la réaction anti-propulsive ayant lieu sur les pistons (40) , et si les pistons sont chargés d'énergie par l'explosion qui suit la compression entre les pistons (I) l'engin comme la fusée ne peut que s'autopropulser .

L'invention préconise également de disposer ces moteurs l'un dérriére l'autre entre le fuselage et les flotteurs d'un trimaran , la double rangée demoteurs et leur multiplicité permettra un envol vertical , et un attérissage facile et sans risque .

Le premier propulseur peut être muni d'une hélice classique afin d'éviter une catastrophe en cas de rencontre avec un oiseau , les suivantes peuvent être des hélices transoniques , une ou plusieures souflantes , hétices ou souffantes pouvant être carénées à striction . Le courant d'air crée par cette multiplicité d' d'hélices ajouté aux forces appliquées sur les culasses , aux tractions des masses semies rotatives permettra de pouvoir faire fonctionner deux statoréacteurs , ou pulsoréacteurs , ou des statofusée . Si nécessaire une fois les statorécteurs mis en route et la vitesse aquise suffisante à leur fonctionnement les hélices peuvent être désolidarisées des moteurs à l'aide d'embrayages , et des freins les immobilisent si nécessaire .

Autre variante de réalisation deux ou plusieurs des moteurs préconisés démunis d'hélices peuvent animer à l'aide d'engrenages multiplicateurs de vitesse les compresseurs basse et haute pression de turboréacteurs démunis de turbines .

Ce qui permettra l'utilisation d'un carburant donnant 2500, ou 3000 degrés de chaleur , en mélangeant moins d'air au kéroséne .

Les autres moteurs animants des hélices , ou des souffanlantes cette variante de réalisation sera un turbopropulseur double flux très puissant .

Si les forces données sur les culasses ne sont pas assez puissantes pour permettre d'atteindre la vitesse de libération , ou pour permettre d'économiser en vue de voyages trés lointains le carburant , et le comburant , cet hydravion spatial peut être la navette d'une fusée .

Ou d'un avion identique mais plus fort portant l'avion à vocation spatial sur sont dos , et revenant au sol aprés avoir utiliser la plus grande partie de sont carburant et comburant , qui peuvent êtres contenus dans des réservoirs largables ou non disposés dans les deux flotteurs latéraux de ces trimarants .

Evidemment cet hydravion peut être munis de roues , et s'il est trop lourdement chargé , l'envol vertical peut ne pas être réalisable , toutefois un envol court sur une piste , ou sur l'eau sera facilité par ses nombreux moteurs , dont le quart , ou la moitié peuvent donner des poussées horizontales , et les autres des poussées verticales .

Variantes de réalisations des masses semies rotatives (2), dont leur animation peut être réalisée pour le moteur de la fig.I par les engrenages (5) qui peuvent animer d'autres engrenages solidaires des axes (6) , en ce cas les bielles manivelles (3) peuvent êtres supprimées . Les pignons dentés (9et22) peuvent êtres remplacés ainsi que les chaines par des engrenages coniques , et des arbres . Les axes (8) des B.M.(4) de tous les moteurs peuvent êtres solidaires de volants (I2), un volant(I2) peut être solidaire de l'axe (I0) ,des démarreurs débrayables sont solidaires des axes des bielles manivelles (4),les pignons dentés du système à encliquetages peuvent être remplacés par des engrenages

Les moteurs des figures I, 3, 4, 5 peuvent également êtres approvisionner en comburant carburé ou non à l'aide d'un , ou de multiples turbocoompresseurs (48) animés par des moteurs électriques . Les cylindres peuvent êtres munis de soupapes (I3) actionnée à l'aide de chaines par les axes (I6) .

Evidemment seule la construction de ces moteurs permettra de savoir dans quelle mesure ils sont capables d'autopropulsion , toutefois la force appliquée sur les culasses est aussi puissante que celle appliquée sur les pistons .

Combien de moteurs deux temps sont capables de fonctionner sans addition d'huile au carburant ? , ce dont est également capable le moteur de la figure 4 , dont la consommation de carburant sera fort probablement inférieure à celles de tous les moteurs connus .

Ce moteur ne perdant aucune force sur des culasses , pouvant avoir de trés longs cylindres permettant l'utilisation d'une grande partie de la chaleur du carburant , pouvant donner un mouvement rotatif avec ou sans le passage des points morts de ses manivelles .

Pouvant actionner deux masses semies rotatives , et une hélice , ou quatre masses semies rotatives , dont deux peuvent êtres située de chaque coté du carter . La force centrifuge donnée de nombreuses fois en une seconde par des masses semie rotatives est elle également une illusion ,ce moteur peut également animer deux hélices , ou des roues .

Les figures 8 et 9 de la planche 7 représentent des vues de façe , et de profil des carénes enrobant les hélices et le moteur placé en leur centre , et désigné par la lettre M.

Ces carénes permettront l'obtention d'un puissant courant d'air sans géner le basculement des moteurs afin d'obtenir l'envol , et l'attérissage vertical .

La caréne (50)est solidaire du moteur , et des pivots (2I) elle enrobe le moteur et les masses somie-rotatives (2 ) , une deuxiéme caréne (5I) coulisse sur la caréne (50) , sont coulissement peut être réalisé à l'aide de petits moteurs électriques placés en des endroits adéquats , moteurs actionnants des cables dans deux directions , cables pris en sandewich entre deux roulettes placés en des endroits adéquats sur la caréne fixe à ses deux extémitées , carénes assurant un courant d'air puissant aux turboréacteurs à double flux , ou aux statoréacteurs , ou aux statofusées , les carénes (5I) étant extensibles elles permettent le basculement des moteurs en trois positions, et assurent une force obtimum au courant d'air .

La figure 5 de la planche 5 (coté droit du dessin ) montre que tous ces moteurs peuvent êtres munis de soupapes (I3) commandées par cames (I5) , bougie de chauffe , ou d'allumage (53) , qu'ils fonctionnent à l'essence , ou en Diésel ils peuvent utiliser des moyens connus , régulateur de pression , calculateurs d'injection , sonde à oxygéne , et....(injecteur de carburant non figuré) S'ils fonctionnent en Diésel les poussées dues aux explosion sur les pistons , et sur les culasses des moteurs des figures I,3,5, sont de 60 Kg au centimétre carré , et si ces cylindres ont I00 millimétres de diamétre ils seraient donc capables graçe aux explosions de soulever 4800 Kg , cela est un peut mieux que le double du poids du moteur , car sans masses semie-rotatives il ne serait pas plus lourd que le moteur Sarich qui pese 4I Kg .

A ces poussées nous pouvont ajouter les tractions dues aux masses semie-rotatives (2) et dans l'air la force des hélices .

Le refroidissement des moteurs dans le vide spatial peut être assuré par un radiateur radiant .

Un axe peut indiquer au calculateur d'injection , ou à l'allumage la position des pistons , ce à l'aide de moyens connus , afin que l'angle d'injection soi adéquat , à fin d'éviter le passage des points morts , les pistons en trojection ne peuvent -t-ils servir de points d'appui tout comme le gaz de la fusée aucun organe ne produisant des forces de sens contraire à celles appliquées sur les culasses . Autre variante de réalisation , deux petits turboréacteurs classiques sont placés derriere les moteurs préconisés placés l'un derrière l'autre et munis d'hélices classique pour le premières , transoniques en suite munies de trois ou quatre pales , de souffantes , le tout caréné , réalisation permettant obtention d'turboréacteur à double flux très puissant , n'ayant pas les défauts cause de l'echec du turbopropulseur Hamilton à double flux .

Echec du à sont unique hélice transonique à I2 pales , mécanisme délicat , car les systèmes de variation de pas des hélices devant êtres logés dans le moyeu , et aussi du à sont réducteur de vitesse monstrueux , pesant 30% du poids du moteur , et consommant beaucoup d'énergie .

Le placement des hélices l'une dérrire l'autre , et leur multiplicité corrige tous les défauts du du turbopropulseur Hamilton , et permet le fonctionnement de statofusée à basse vitesse .

Si cet hydravion est muni de deux rangée de dix moteurs ces moteurs ayant chacun trois cylindres , ils seront donc l'équivalant de quatre moteurs de quinze cylindres n'actionnant que quatre hélices , les vingt moteurs animeront vingt hélices , et quarante masses semie-rotatives , hélices donnant un puissant courant d'air .

Evidemment n'étant qu'autodidac , et n'ayant pas derriére moide puissants laboratoires , et comme aucun moteur actuel n'utilise pour propulser la force centrifuge , l'on peut douter qu'elle soi utilisable , en vue de la propulsion d'un véhicule .

Pourtant la encore une maquette que j'ai construite semble bien prouver que la chose n'a rien d'utopique ; cette maquette est un chariot à quatre roues , au centre du quel j'ai fixé un pivot solidaire d'un bras ayant à son extrémité une masse que je fait tourner à l'aide de la main , le chariot avance , et recule .

Donc des demic-rotations de masses non rien d'utopique , et comme les moteurs permettront leur animation 20 ou 30 fois en une seconde , qu'avec l'aide de l'atome elles peuvent avoir lieu pendant des temps trés longs elles permettront d'atteindre une vitesse considérable loin des champs de pesanteur dans le vide spatial , et de permettre d'annuler cette vitesse , les propulseurs étant orientables .

D'autant que les dispositifs à ressorts des figures 2 et 6 évitent que l'arret des masses (2) interdise l'autotraction donnée par ces masses semie-rotatives .

Si les moteurs préconisés comme étant autopropulseurs se révèlent une fois construits ne pouvant pas l'être la multiplicité des hélices placées l'une dérriére l'autre créera un puissant courant d'air permettant la mise en route de statofusées .

Si chaque moteur anime une hélice de Im50 vingt moteur seront donc l'équivalant de deux hélices d'hélicoptérs de I5 métres de diamétre , de quoi assurer l'envol vertical .

Deux engins du méme genre peuvent êtres mis en orbite , ou se soliariser dans l'air à l'aide du systéme utilisé pour ravitailler les avions en carburant , les tuyaux étant remplacés par des cables électriques , un engin contenant le réacteur fournisseur d'électricité sera inhabité , les masses semie-rotatives pourront donc fonctionner très longtemps , l'engin habité muni de moteurs sera la navette attérissant sur les planètes convoitées ?

## Revendications

1. Hydravion spatial , ou avion à grande vitesse , ou navette mise en orbite par une fusée , envue de voyages lointains , ou par un engin identique à cet hydravion mais revenant au sol aprés avoir épuisé la majeur partie de sont carburant , et comburant , engin caractérisé en ce que ses moteurs à quatre pistons droits , ou toriques animent des hélices carénées à striction , ou classiques , des masses semies rotatives , et que fort probablement les dispositions mécaniques préconisées permettront l'utilisation des forces appliquées sur les culasses des cylindres de ces moteurs , forces aussi puissantes que celles appliquées sur les pistons , forces qui se perdent sur le vilbrequin du moteur classique au point mort bas , et qui font que le moteur classique n'a un rendement que de 30% , forces opposées verticalement à celles données par l'explosion sur ses culasses , et qui interdisent à ce moteur d'être autopropulseur , la réaction ayant lieu sur les pistons des moteurs préconisés ne fait que comprimer le comburant carburé ou non entre les pistons (I) dans un cylindre horizontal , elle ne donne donc pas de forces verticalement opposées à celles données sur les culasses des cylindres disposés verticalement (43) figure I , l'explosion qui suit ne fait que lancer les pistons dans le sens de la marche , et les charger d'énergie ce qui leur permet de servir depoints d'appui aux explosions ayant lieu dans les cylindres verticaux, en ce que les explosions ayant lieu simultannément sur deux culasses des cylindres toriques donne le méme résultat que pour les moteurs à pistons droits elles ne font que comprimer le comburant carburé , ou non , et que les deux explosions qui suivent chagent les pistons d'énergie , masses non perdues servant de points d'appui , le rejet des pistons ne donnant graçe aux systémes pendulaires aucune force de sens contraire aux forces appliquées sur les culasses , systèmes pendulaires constitués de tiges courbes (7) solidaires de bras (20) solidaire d'un axe (6) qui ne fait que pivoter systémes rendant solidaires les pistons droits (I) et (40) de la figure I, (40) de la figure 3, et les pistons (I) de la figure 5 , en ce que dans ces moteurs une fois la mise en route effectuée graçe aux bielles manivelles (4)dont l'axe est solidaire de démarreurs , des avances à l'injection , ou à l'allumage interdissent le passage des points morts des manivelles, donc aucune force ne se perd sur ceux-ci , et les pistons sont de ce fait des masses non perdues chargés d'une grande énergie servant de points d'appui , n'est ce pas un point d'appui gazeux qui permet l'autopropulsion de lafusée , du turboréacteur , en ce que les bielles manivelles (4) étant plus petites que les bielles manivelles (3) elles interdisent à celles-ci de passer leurs points morts ce qui permet à l'aide de pignons dentés (9) (ou d'engrenages coniques ) situés à l'extérieur du carter d'animer à l'aide de chaines un autre pignon denté (22) solidaire des bras (45) solidaires des masses (2) qui ne peuvent décrire que des demies rotations autotractives si les pignons dentés sont de dimensions adéquates .

2. Dispositif moteur deux temps à pistons droits , ou toriques actionnants des masses semies rotatives autotractives selon la revendication I , caractérisé en ce que ces masses (2) coulissent sur les bras (45) , elles peuvent donc êtres rétractées vers l'axe (22) , ce pour faciliter la mise en route du moteur , des cables s'enroulant sur une poulie tournant sur l'axe (47) , poulie animée par un petit moteur électrique , des freins rendant solidéire la poulie et l'axe (47) et se désérrent légérement l'orse que le moteur est en marche, la force centrifuge plaquant les masses (2) contre les ressorts d'éxtrémité des bras (45) ,en ce que pour l'arret et le renvoi dans l'autre sens des masses (2) les explosions sont aidées par les systèmes à ressorts (27) , fig.2 contenus dans des cylindres toriques (42) dans les quels ont lieu des projections d'huile quand les ressorts sont débandés , le piston (26) étant plus petits que les cylindres (42) ils laissent passer cette huile qui donne une certaine force propulsive sur les culasses (4I) , l'animation de ce piston ayant lieu à l'aide de pignons dentés (25et30) , et d'une chaîne .

3. Dispositif moteur deux temps , à pistons droits , ou toriques dont les bielles manivelles ne passentplus leurs points morts un fois la mise en route effectuée , et pouvant néant moins animer des hélices , selon la revendication I caractérisé en ce que ces moteurs peuvent actionner des hélices car les axes de leur bielles manivelles sont solidaires d'encliquetages (8) solidaires de pignons dentés actionnant à l'aide de chaines d'autres pignons dentés solidaires d'un axe (I0) axe donnant le mouvement rotatif , axe solidaire d'un volant (I2) , en ce que les pignons peuvent êtres remplacés par des engrenages . (moteurs des figures I,3,4,5)

4. Hydravion spatial, ou avion à grande vitesse propulsé par les moteurs préconisés selon la revendication I , caractérisé en ce que les moteurs , et les propulseurs préconiséssont contenus dans des carters munis de pivots (2I) pouvant êtres actionnés par des dispositifs connus , engrenages , moteur électrique , frein , etc. , afin de permettre l'orientation de ces moteurs dans trois positions , une donnant le vol horizontal, l'autre l'envol, et l'attérissage vertical , et comme ces moteurs sont fort probablement autopropulseurs le freinage de l'appareil dans le vide spatial en vue de l'attérissage sur des planétes à une vitesse non suicidaire , un bouclier relevable à l'horizontal en vol normal protégeant les moteurs lors des rentrées en atmosphéres , en ce que un des pivots est solidaire du fuselage , et l'autre des flotteurs du trimarant , qui peuvent contenir des réservoirs de comburant, de carburant réservoirs éjectable, ou non une fois vides .

5. Hydravion spatial, ou avion à grande vitesse selon la revendication I, caractérisé en ce que l'invention préconise de ne pas placer ces moteurs en ligne sur l'aile porteuse comme cela est la règle , mais de disposer ces moteurs l'un derrière l'autre , cette disposition amplifiant fort probablement le soufle des hélices , ce qui fort probablement permettra de pouvoir faire fonctionner des statoréacteurs , ou des statofusée ne fonctionnant en fusée que que dans le vide spatial , , en ce que les hélices de ces moteurs peuvent êtres des hélices classiques , ou transoniques , ou des souflantes , si besoin est une fois que l'avion a obtenu une vitesse suffisante pour permettre le fonctionnement des pulsoréacteurs les hélices peuvent êtres débrayées des moteurs et des freins peuvent les caler , les moteurs en atmosphère êtres probablement arrétés ,ou non étant autopropulseurs méme dans le vide spatial .

6. Avion à grande vitesse selon la revendication I , variante de realisation utilisant les moteurs préconisés pour réaliser des turbopropulseurs à double flux , caractérisée en ce que les derniers de ces moteurs placés l'un dérriére l'autre peuvent ne pas êtres munis d'hélices mais actionner les comprésseurs d'un turbopropulseur à double flux à l'aide d'engrenages multiplicateurs de vitesse turbopropulseur démuni de turbine .

7. Moteur à quatre pistons droits actionnant des hélices , et deux masses semies rotatives selon la revendication I , caractérisé en ce que ce moteur a deux cylindres dons les quels évoluent (variante de réalisation fig.4) deux pistons (I) travaillants en opposition , pistons munis de bielles solidaires de systèmes bielles manivelles (3)qui ne passent pas leurs points morts , bielles manivelles solidaires à l'aide de chaines (I8) , ces bielles manivelles (3) étant solidaires ainsi que les bielles des pistons (I) d'arbres (20) solidaires de bielles manivelles (4) qui comme pour les autres moteurs une fois la mise en route réalisée , et si le moteur actionne des masses semies rotatives (2) peuvent ne plus passer leurs points morts , les axes de ces quatre bielles manivelles pouvant êtres solidaires d'encliquetages (8)dentés actionnants à l'aide de chaines les pignons dentés d'un axe (I0) axe muni d'un volant (I2) et donnant le mouvement rotatif pour actionner des roues , ou des hélices , en ce que les bielles manivelles (3) à l'aide des systèmes décrits pour les autres moteurs peuvent animer deux masses semies rotatives (2) , en ce que ce moteur est enfermé dans un carter (4I) , solidaire d'axes (2I) permettant sont oriantation , et que si il est muni de masses (2) il peut être également solidaire de quatre systémes à ressorts de la figure 2 , en ce que les systèmes bielles manivelles permettent d'avoir des cylindres de trés grande longueur qui peuvent mesurer 35 cm entre les deux faces des pistons si le moteur mesure Im50 , donc il utilisera mieux la chaleur que le moteur classique , et d'avoir une trés grande puissance si l'on injecte beaucoup de carburant , en ce qu'il peut animer deux hélices s'il n'anime pas de masses semies rotatives , hélices carénée permettant l'envol vertical , et donnant des poussée horizontales , l'intérieur des cylindres et les autres organes étant graissés à l'aide d'une pompe .

8. Moteur à quatre pistons toriques , variante de réalisation capable d'autopropulsion à l'aide des forces que les explosions appliquent sur ses culasses , et sur ses pistons , animant une hélice , et deux masses semie rotatives , selon la revendication I , caractérisé en ce que les pistons toriques (I) de ce moteur sont solidaires à l'aide de tiges courbes (7) solidaires des bras (20), systémes pendulaire graçe au pivot(6) , axe solidaire d'un engrenage (5 qui est solidaire d'un autre engrenage de taille identique solidaire d'une autre partie motrice identique située sur un plandifférent en ce que sa mise en route s'effectue à l'aide de bielles manivelles (4) solidaires des bras (20) , et qu'une fois la mise en route effectuée des avances à l'injection , ou à l'allumage peuvent permettre de ne plus passer les points morts des bielles manivelles (4)les axes (6) , ou les axes des bielles manivelles (4 étant solidaires d'encliquetages qui permettent à un axe (I0)non figuré d'actionner une hélice , en ce que l'extrémité du bras (20) est solidaire de bielles manivelles (3) qui ne peuvent passer leur points morts , la bielle manivelle (4) étant plus petite le leur interdisant , les axes (I6) de ces bielles manivelles étant solidaires de pignons dentés (9) situés à l'extérieur du carte (non figuré) et ils actionnent à l'aide de chaines deux autres pignons dentés (22) qui actionne à l'aide du bras (45) une masse semie rotative qui comme pour les autres moteurs peut être rétractée lors de la mise en route , en ce que ce moteur est enfermé dans un carter oriantable muni d'axes (2I)permettant l'oriantation de ce moteur autopropulseur , en ce que chaque culasse des cylindres toriques est muni d'un systéme (coté droit du dessin ) qui permet l'injection du comburant carburé , ou non dans les cylindres quand les gaz brulés s'échappent par les lumiéres (5I) , des soupapes (I3) étant actionnées à l'aide d'encliquetages dentés solidaires des axes (I6) qui actionnent à l'aide de chaines d'autres pignons dentés solidaires de cames (I5) qui actionnent les soupapes qui permettent l'introduction du comburant carburé , ou non a l'aide d'un turbocompresseur (48) actionné comme ceux des autres moteurs par un moteur électrique ,le graissage à lieu à l'aide d'huile mélangée au comburant

9. Dispositif mécanique ne perdant pas les masses (I) qui perméttent sont autopropulsion , et actionnant deux masses (2) semies rotatives selon la revendication I, caractérisé en ce que ce propulseur capable de donner des propulsion de trés longues durée avec l'aide de l'atome , dont seulement une partie est représentée sur le coté droits de la figure 6 permet l'animation de quatre masses (I) graçe à deux systèmes pendulaires , constitués chacun de deux masses (I) solidaires d'une tige courbe (7) , solidaire d'un bras (20) oscillant sur un arbre pivot (6) , l'autre extrémitée de ce bras étant solidaire de deux bielles manivelles (3) dont leurs axes (6) sont solidaires de pignons dentés (9) situés en dehors du carter (4I) , qui animent à l'aide de chaines deux autres pignons dentés (22) , solidaires chacun d'un bras (45) , solidaire d'une masses (2) , ces pignons dentés de tailles adéquates faisant décrire à la masse (2) des demies rotations autotractives , en ce que les bras (20) sont solidaires à hauteurs adéquates de systèmes bielles manivelles (4) plus petits que les systèmes bielles manivelles (3) , sytémes (4) qui interdisent aux systémes B.M. (3) de passer leurs points morts , les axes des B.M. (4) sont solidaires de volants (I2) et de moteurs électriques , les masses (I) donnent également donnent également des forces propulsives en butant les ressorts (27) , en ce que l'axe (6) est solidaire d'un engrenage (5) solidaire d'un autre engrenage solidaire par sont axe d'un systéme identique à celui qui viens d'être décrit , et situé sur un plan supérieur , tout cet ensemble étant situé dans un carter à l'exception des masses semie-rotatives , des chaines , des pignons dentés , et des chaines , les ressorts (27) peuvent donc êtres graissés , et sont situés dans des cylindres toriques , les pignons dentés , et les chaines peuvent également êtres situés dans des carters , et les chaines sont munies de tendeurs , en ce que ce système est également autopropulseur sans masses (2) .

10. Hydravion spatial dont les moteurs animent des hélices classiques , ou transoniques , des soufflantes , toutes carénées selon les revendications 4,5,6, caractérisé en ce que sur les carénes (50) , fig.7, qui enrobent les moteurs , coulissent d'autres carénes (5I) dont le coulissement a lieu à l'aide de cables animés par des petits moteurs électriques placés en des endroits adéquats , ou à l'aide de crémailliéres , les carénes (5I) étant rétractées sur les carénes (50) afin de permettre le basculement des moteurs .

11. Variante de réalisation de l'utilisation des moteurs munis d'hélices et de soufflantes carénées , moteurs placés l'un dérrierre l'autre , selon les revendications 4,5,6, caractérisé en ce que au lieu de permettre le démarrage de statofusée les moteurs préconisés actionnant des hélices , des soufflantes peuvent permettre à des turbopropulseurs classiques , ou démunis de turbines de constituer des propulseurs à double flux beaucoup plus puissants que celui donné par les soufflantes des turboréacteurs classiques en ce que ces moteurs étant orientables et munis d'hélices ils peuvent permettre l'envol , et l'attérissage vertical , avec ou sans des tuyéres orientables dont peuvent êtres munis les turbocompresseurs , avec en prime une plus grande vitesse que celle de l'hélicoptér en vol horizontal , et une plus grande sécurité qu'avec deux moteurs oriantables , munis de très grandes hélices .
